# EUROPEAN PATENT APPLICATION

(11) **EP 4 757 272 A1**
(43) Date of publication of application: **10.06.2026**
(21) Application number: 24861923.1
(22) Date of filing: 02.09.2024
(51) Int. Cl.: H04L 45/28

(54) **MESSAGE PROCESSING METHOD AND RELATED DEVICE**

(30) Priority: 07.09.2023 CN 202311155788
(71) Applicant: HUAWEI TECHNOLOGIES CO., LTD., Shenzhen, Guangdong 518129 (CN)
(72) Inventor: LI, Jie, Shenzhen, Guangdong 518129 (CN); JI, Zhigang, Shenzhen, Guangdong 518129 (CN); LIU, Shixing, Shenzhen, Guangdong 518129 (CN); LI, Ling, Shenzhen, Guangdong 518129 (CN); ZHOU, Yijin, Shenzhen, Guangdong 518129 (CN); CHEN, Xuemin, Shenzhen, Guangdong 518129 (CN); WANG, Songlin, Shenzhen, Guangdong 518129 (CN)
(74) Representative: Huawei European IPR
(86) International application number: PCT/CN2024/116201
(87) International publication number: WO 2025/051079

(57) **Abstract**

This application discloses a packet processing method and a related device. A first communication apparatus obtains a hash key value based on an obtained first packet, and obtains a first path selecting parameter of a flow corresponding to the first packet; and the first communication apparatus determines, based on the hash key value and the first path selecting parameter, a first path for sending the first packet, and sends the first packet through the first path. In this way, when the first communication apparatus needs to forward a packet after sensing a gray failure, the first communication apparatus only needs to use a path selecting parameter of a flow to which the to-be-forwarded packet belongs and a hash key value in the to-be-forwarded packet as a hash-based path selecting parameter to perform hash-based routing, to implement fast switching between forwarding paths for the to-be-forwarded packet when the gray failure occurs. This simplifies configuration work that needs to be implemented during path switching, and reduces time overheads of path switching, so that path switching can be performed in time after the gray failure occurs, and recovery time of a service flow is short enough to minimize impact of the gray failure on a service.

## Description

This application claims priority to Chinese Patent Application No. 202311155788.9, filed with the China National Intellectual Property Administration on September 7, 2023 and entitled "PACKET PROCESSING METHOD AND RELATED DEVICE", which is incorporated herein by reference in its entirety.

### TECHNICAL FIELD

This application relates to the field of communication technologies, and in particular, to a packet processing method and a related device.

### BACKGROUND

When a gray failure occurs in a network, a path switching operation needs to be performed, so that a service flow bypasses a gray failure location to ensure normal service running.

Currently, implementations of the path switching operation include: Manner 1: A control plane updates a link status, and notifies a neighbor of an updated link status by using a protocol, to update a route, so as to implement path switching of the service flow on a data plane. Manner 2: A data plane modifies a hash (hash)-based routing result, to implement path switching of the service flow on the data plane. Although path switching of the service flow can be implemented on the data plane in both the foregoing two manners, time taken for path switching is long, and impact of the gray failure on the service flow cannot be mitigated.

### SUMMARY

Based on this, this application provides a packet processing method and a related device. In a process of forwarding a data plane packet, a path selecting parameter is introduced to participate in determining a packet transmission path together with a hash key value, so that fast path switching is more convenient, and impact of a gray failure on a flow to which the packet belongs is mitigated.

According to a first aspect, this application provides a packet processing method. For example, the method may include: A first communication apparatus obtains a hash key value (hash_key) based on an obtained first packet, and obtains a first path selecting parameter of a flow corresponding to the first packet, so that the first communication apparatus determines, based on the hash key value and the first path selecting parameter, a first path for sending the first packet, and sends the first packet through the first path. Both the hash key value and the first path selecting parameter are used by the first communication apparatus to determine the path for sending the first packet, and may be understood as parameters that participate in hash-based routing. In this way, when the first communication apparatus needs to forward a packet when sensing that a gray failure occurs, the first communication apparatus only needs to use a path selecting parameter of a flow to which the to-be-forwarded packet belongs and hash_key in the to-be-forwarded packet as a hash-based path selecting parameter to perform hash-based routing, to implement fast switching between forwarding paths for the to-be-forwarded packet when the gray failure occurs, without implementing path switching through protocol convergence on a control plane, and without implementing path switching by locally modifying, by the communication apparatus, a hash-based routing result on a data plane. This simplifies configuration work that needs to be implemented during path switching, and reduces time overheads of path switching, so that path switching can be performed in time after the gray failure occurs, and recovery time of a service flow is short enough to minimize impact of the gray failure on a service.

In some implementations, the method may further include: The first communication apparatus updates the first packet based on the first path selecting parameter, where an updated first packet includes the first path selecting parameter. In this case, for example, that the first communication apparatus sends the first packet through the first path may include: The first communication apparatus sends the updated first packet through the first path. In this way, the first path selecting parameter, which is a parameter participating in hash-based routing, is carried in the first packet, so that a communication apparatus that is after the first communication apparatus and that supports the method provided in this application can obtain the first path selecting parameter from the received first packet, and perform hash-based routing based on the first path selecting parameter and hash_key. Therefore, it is possible to implement fast path switching on the communication apparatus.

In an example, for a second communication apparatus included in the first path, if the second communication apparatus supports the method provided in this application, the second communication apparatus may determine, based on the first path selecting parameter and the hash key value that are in the updated first packet, a forwarding path for forwarding the updated first packet. If the second communication apparatus does not support the method provided in this application, the second communication apparatus may determine, based on the hash key value in the updated first packet, a forwarding path for forwarding the updated first packet.

In an example, for different types of first packets, locations of carrying the first path selecting parameter in the first packets are also different. For example, if the updated first packet is a transmission control protocol (Transmission Control Protocol, TCP) packet, the updated first packet may carry the first path selecting parameter via a TCP header. For example, a reserved (Reserved) field of the TCP header of the first packet carries the first path selecting parameter. For another example, if the updated first packet is a virtual extensible local area network (Virtual Extensible Local Area Network, VXLAN) packet, the updated first packet may carry the first path selecting parameter via a VXLAN header or a user datagram protocol (User Datagram Protocol, UDP) header. For example, a UDP Src.Prot field of the UDP header or a Reserved field of the VXLAN header of the first packet carries the first path selecting parameter. For still another example, if the updated first packet is a remote direct memory access (Remote Direct Memory Access, RDMA) packet, the updated first packet carries the first path selecting parameter via a base transport header (Base Transport Header, BTH). For example, a Reserved field of the BTH of the first packet carries the first path selecting parameter.

In some implementations, the method may further include: The first communication apparatus obtains first indication information of the flow corresponding to the first packet, where the first indication information indicates the first communication apparatus to modify a path selecting parameter; and the first communication apparatus updates the first packet based on the first indication information, where the updated first packet includes a path switching identifier corresponding to the first indication information, and the path switching identifier indicates a third communication apparatus to perform path switching. The third communication apparatus may be understood as a destination node of the first packet, and the third communication apparatus supports the method provided in this application. In this way, after discovering that a gray failure exists in a path corresponding to a service flow, the first communication apparatus notifies, by including the path switching identifier in a specific packet of the service flow, a peer-end communication apparatus (namely, the third communication apparatus) of the service flow to perform a path switching operation, so that the service flow bypasses the gray failure in two directions as much as possible, thereby ensuring network reliability with a higher probability.

In an example, that the first communication apparatus obtains the first indication information of the flow corresponding to the first packet may include: The first communication apparatus obtains the first indication information from a target flow table in which the hash key value is located. In this case, the method may further include: updating the first indication information in the target flow table to second indication information, where the second indication information indicates that the first communication apparatus does not modify the path selecting parameter. In this way, after the target flow table maintained by the first communication apparatus includes the first indication information, the path switching identifier is added, based on an indication of the first indication information, only to any packet that matches the target flow table. Once the path switching identifier is added to a specific packet, the first communication apparatus may update the first indication information in the target flow table to the second indication information, to avoid a case in which the first communication apparatus adds path switching identifiers to a plurality of packets belonging to a service flow in which a gray failure occurs, and consequently, a peer end (namely, the third communication apparatus) triggers a plurality of path switching operations after receiving the plurality of packets that carry the path switching identifiers. This case not only increases unnecessary overheads of a network, but also easily causes the third communication apparatus to re-switch, after the plurality of path switching operations, the service flow back to a location at which the gray failure occurs.

In some implementations, if the first communication apparatus maintains the target flow table, that the first communication apparatus obtains the first path selecting parameter of the flow corresponding to the first packet may include: The first communication apparatus obtains the first path selecting parameter from the target flow table.

In some other implementations, that the first communication apparatus obtains the first path selecting parameter of the flow corresponding to the first packet may alternatively include: The first communication apparatus obtains the first path selecting parameter based on the first packet. In a case, if the first communication apparatus is an ingress node of the first path, the first communication apparatus determines the first path selecting parameter based on a parameter carried in the first packet. Specifically, parameters in the first packet that are used to determine the first path selecting parameter and a manner of determining the first path selecting parameter based on the parameter in the first packet may be flexibly designed. In another case, if the first communication apparatus is an intermediate node, when the first packet is processed on an ingress node, the ingress node may include the first path selecting parameter in the first packet. In this case, after receiving the first packet, the first communication apparatus may obtain the first path selecting parameter by parsing the first packet.

In some implementations, when the first communication apparatus maintains the target flow table, before the first communication apparatus obtains the first path selecting parameter of the flow corresponding to the first packet, the method may further include: When determining that a gray failure that affects the flow corresponding to the first packet exists in a network, the first communication apparatus modifies a value of a path selecting parameter in the target flow table, where after the modification, the target flow table includes the first path selecting parameter, and before the modification, the target flow table includes a second path selecting parameter.

In an example, before the first communication apparatus modifies the value of the path selecting parameter in the target flow table, the method may further include: The first communication apparatus receives a second packet, where the second packet and the first packet belong to a same flow; the first communication apparatus obtains the hash key value based on the second packet; the first communication apparatus obtains the second path selecting parameter of a flow corresponding to the second packet, where the second path selecting parameter is used by the first communication apparatus to determine a path for sending the second packet; the first communication apparatus determines, based on the hash key value and the second path selecting parameter, a second path for sending the second packet; and the first communication apparatus sends the second packet through the second path. It can be learned that before sensing a gray failure of a service flow, the first communication apparatus can determine, in a hash-based routing manner provided in this application, the second path different from the first path, and forward a packet of the service flow through the second path.

According to a second aspect, this application further provides a packet processing method. The method is applied to a peer-end node of a first communication apparatus: a third communication apparatus. For example, the method may include: The third communication apparatus receives a first packet from the first communication apparatus, where the first packet may include a hash key value, a first path selecting parameter, and a path switching identifier, and the path switching identifier indicates the third communication apparatus to perform path switching; and the third communication apparatus modifies, based on the path switching identifier, a path selecting parameter in a target flow table in which the hash key value is located, where after the modification, the target flow table includes the first path selecting parameter, and the first path selecting parameter in the target flow table is used by the third communication apparatus to determine a path for sending a packet belonging to a backward flow of the first packet. In this way, after the first communication apparatus performs path switching, the peer-end third communication apparatus modifies a path selecting parameter in a local related flow table based on an indication of the path switching identifier in the packet, to prepare for path switching of the backward service flow. Because it is difficult to locate a failure occurrence location when a gray failure occurs, in this application, bidirectional path switching is implemented in time, so that a service flow bypasses the failure location during transmission in a network with a higher probability, and impact of the gray failure on a service can be minimized.

In some implementations, the method may further include: The third communication apparatus obtains a second packet based on the first packet, where the second packet does not include the path switching identifier, and the first path selecting parameter in the second packet is set to zero; and the third communication apparatus forwards the second packet to a fourth communication apparatus. In this way, the third communication apparatus deletes path switching-related content in the first packet or sets path switching-related content in the first packet to 0 and then transmits the content backwards, so that the fourth communication apparatus after the third communication apparatus does not sense modification caused by a path switching operation to a packet in a service flow, and the path switching operation does not affect processing of the packet in the service flow by the fourth communication apparatus.

In some implementations, that the third communication apparatus modifies, based on the path switching identifier, the path selecting parameter in the target flow table of the flow corresponding to the first packet may include: If the path switching identifier is valid, the third communication apparatus obtains modification time of the target flow table and a second path selecting parameter in the target flow table; and if the modification time has exceeded a preset time threshold and the second path selecting parameter is different from the first path selecting parameter, the third communication apparatus updates the second path selecting parameter in the target flow table to the first path selecting parameter.

In an example, for different types of first packets, locations of carrying the first path selecting parameter in the first packets are also different. For example, if the first packet is a TCP packet, the first packet may carry the first path selecting parameter via a TCP header. For example, a Reserved field of the TCP header of the first packet carries the first path selecting parameter. For another example, if the first packet is a VXLAN packet, the first packet may carry the first path selecting parameter via a VXLAN header or a user datagram protocol, UDP header. For example, a UDP Src.Prot field of the UDP header or a Reserved field of the VXLAN header of the first packet carries the first path selecting parameter. For still another example, if the first packet is an RDMA packet, the first packet carries the first path selecting parameter via a BTH. For example, a Reserved field of the BTH of the first packet carries the first path selecting parameter.

In the foregoing possible implementations of the first aspect or the second aspect, the first communication apparatus may be, for example, a switch, a router, a service network interface card, or a virtual switch.

According to a third aspect, this application provides a packet processing apparatus. The apparatus is used in a first communication apparatus. The apparatus may include, for example, a first obtaining unit, a second obtaining unit, a third obtaining unit, a first determining unit, and a first forwarding unit. The first obtaining unit is configured to obtain a first packet; the second obtaining unit is configured to obtain a hash key value based on the first packet. The third obtaining unit is configured to obtain a first path selecting parameter of a flow corresponding to the first packet. The first determining unit is configured to determine, based on the hash key value and the first path selecting parameter, a first path for sending the first packet. The first forwarding unit is configured to send the first packet through the first path. Both the hash key value and the first path selecting parameter are used by the first communication apparatus to determine the path for sending the first packet, and may be understood as parameters that participate in hash-based routing.

In some implementations, the apparatus may further include a first updating unit. The first updating unit is configured to update the first packet based on the first path selecting parameter, where an updated first packet includes the first path selecting parameter. The first forwarding unit is specifically configured to send the updated first packet through the first path.

In an example, for a second communication apparatus included in the first path, if the second communication apparatus supports the method provided in this application, the second communication apparatus may determine, based on the first path selecting parameter and the hash key value that are in the updated first packet, a forwarding path for forwarding the updated first packet. If the second communication apparatus does not support the method provided in this application, the second communication apparatus may determine, based on the hash key value in the updated first packet, a forwarding path for forwarding the updated first packet.

In an example, for different types of first packets, locations of carrying the first path selecting parameter in the first packets are also different. For example, if the updated first packet is a TCP packet, the updated first packet may carry the first path selecting parameter via a TCP header. For example, a Reserved field of the TCP header of the first packet carries the first path selecting parameter. For another example, if the updated first packet is a VXLAN packet, the updated first packet may carry the first path selecting parameter via a VXLAN header or a user datagram protocol, UDP header. For example, a UDP Src.Prot field of the UDP header or a Reserved field of the VXLAN header of the first packet carries the first path selecting parameter. For still another example, if the updated first packet is an RDMA packet, the updated first packet carries the first path selecting parameter via a BTH. For example, a Reserved field of the BTH of the first packet carries the first path selecting parameter.

In some implementations, the apparatus may further include a fourth obtaining unit and a second updating unit. The fourth obtaining unit is configured to obtain first indication information of the flow corresponding to the first packet, where the first indication information indicates the first communication apparatus to modify a path selecting parameter. The second updating unit is configured to update the first packet based on the first indication information, where the updated first packet includes a path switching identifier corresponding to the first indication information, and the path switching identifier indicates a third communication apparatus to perform path switching.

In an example, the fourth obtaining unit is specifically configured to obtain the first indication information from a target flow table in which the hash key value is located. In this case, the apparatus may further include a third updating unit. The third updating unit is configured to update the first indication information in the target flow table to second indication information, where the second indication information indicates that the first communication apparatus does not modify the path selecting parameter.

In some implementations, if the first communication apparatus maintains the target flow table, the first obtaining unit is specifically configured to obtain the first path selecting parameter from the target flow table.

In some other implementations, the first obtaining unit is specifically configured to obtain the first path selecting parameter based on the first packet.

In some implementations, when the first communication apparatus maintains the target flow table, the apparatus may further include: a modification unit, configured to: before the first path selecting parameter of the flow corresponding to the first packet is obtained, when it is determined that a gray failure that affects the flow corresponding to the first packet exists in a network, modify a value of a path selecting parameter in the target flow table, where after the modification, the target flow table includes the first path selecting parameter, and before the modification, the target flow table includes a second path selecting parameter.

In an example, the apparatus may further include: a receiving unit, a fifth obtaining unit, a sixth obtaining unit, a second determining unit, and a second forwarding unit. The receiving unit is configured to: before the value of the path selecting parameter in the target flow table is modified, receive a second packet, where the second packet and the first packet belong to a same flow. The fifth obtaining unit is configured to obtain the hash key value based on the second packet. The sixth obtaining unit is configured to obtain the second path selecting parameter of a flow corresponding to the second packet, where the second path selecting parameter is used by the first communication apparatus to determine a path for sending the second packet. The second determining unit is configured to determine, based on the hash key value and the second path selecting parameter, a second path for sending the second packet. The second forwarding unit is configured to send the second packet through the second path.

It should be noted that, for a specific implementation and an achieved technical effect of the apparatus provided in this application, refer to the method provided in the first aspect.

According to a fourth aspect, this application further provides a packet processing apparatus. The apparatus is used in a third communication apparatus, and the apparatus may include, for example, a receiving unit and a modification unit. The receiving unit is configured to receive a first packet from a first communication apparatus, where the first packet may include a hash key value, a first path selecting parameter, and a path switching identifier, and the path switching identifier indicates the third communication apparatus to perform path switching. The modification unit is configured to modify, based on the path switching identifier, a path selecting parameter in a target flow table in which the hash key value is located, where after the modification, the target flow table includes the first path selecting parameter, and the first path selecting parameter in the target flow table is used by the third communication apparatus to determine a path for sending a packet belonging to a backward flow of the first packet.

In some implementations, the apparatus may further include an obtaining unit and a sending unit. The obtaining unit is configured to obtain a second packet based on the first packet, where the second packet does not include the path switching identifier, and the first path selecting parameter in the second packet is set to zero. The sending unit is configured to forward the second packet to a fourth communication apparatus.

In some implementations, the modification unit is specifically configured to: if the path switching identifier is valid, obtain modification time of the target flow table and a second path selecting parameter in the target flow table; and if the modification time has exceeded a preset time threshold and the second path selecting parameter is different from the first path selecting parameter, update the second path selecting parameter in the target flow table to the first path selecting parameter.

In an example, for different types of first packets, locations of carrying the first path selecting parameter in the first packets are also different. For example, if the first packet is a TCP packet, the first packet may carry the first path selecting parameter via a TCP header. For example, a Reserved field of the TCP header of the first packet carries the first path selecting parameter. For another example, if the first packet is a VXLAN packet, the first packet may carry the first path selecting parameter via a VXLAN header or a user datagram protocol, UDP header. For example, a UDP Src.Prot field of the UDP header or a Reserved field of the VXLAN header of the first packet carries the first path selecting parameter. For still another example, if the first packet is an RDMA packet, the first packet carries the first path selecting parameter via a BTH. For example, a Reserved field of the BTH of the first packet carries the first path selecting parameter.

It should be noted that, for a specific implementation and an achieved technical effect of the apparatus provided in this application, refer to the method provided in the second aspect.

In the foregoing possible implementations of the third aspect or the fourth aspect, the first communication apparatus may be, for example, a switch, a router, a service network interface card, or a virtual switch.

According to a fifth aspect, this application provides a communication apparatus. The communication apparatus includes a processor and a memory, the memory is configured to store instructions or program code, and the processor is configured to invoke the instructions or the program code from the memory and run the instructions or the program code, to perform the method in any one of the first aspect, the possible implementations of the first aspect, the second aspect, or the possible implementations of the second aspect.

According to a sixth aspect, this application provides a communication system. The communication system includes a first communication apparatus and a third communication apparatus. The first communication apparatus is configured to perform the method in any one of the first aspect or the possible implementations of the first aspect. The third communication apparatus is configured to perform the method in any one of the second aspect or the possible implementations of the second aspect.

According to a seventh aspect, this application provides a storage medium, including instructions, a program, or code. When the instructions, the program, or the code is executed on a processor, the processor is enabled to perform the method in any one of the first aspect, the possible implementations of the first aspect, the second aspect, or the possible implementations of the second aspect.

According to an eighth aspect, this application provides a program product, including readable instructions. The readable instructions are used to perform the method in any one of the first aspect, the possible implementations of the first aspect, the second aspect, or the possible implementations of the second aspect.

### BRIEF DESCRIPTION OF DRAWINGS

FIG. 1 is a diagram of an architecture of a network 100 according to an embodiment of this application;
FIG. 2 is a schematic flowchart of a packet processing method 100 according to an embodiment of this application;
FIG. 3 is a diagram of a structure of a TCP header of a first packet according to an embodiment of this application;
FIG. 4 is a diagram of a structure of a first packet according to an embodiment of this application;
FIG. 5 is a diagram of a structure of a BTH of a first packet according to an embodiment of this application;
FIG. 6 is a diagram of a structure of a packet processing apparatus 600 according to an embodiment of this application;
FIG. 7 is a diagram of a structure of another packet processing apparatus 700 according to an embodiment of this application;
FIG. 8 is a diagram of a structure of a communication apparatus 800 according to an embodiment of this application;
FIG. 9 is a diagram of a structure of another communication apparatus 900 according to an embodiment of this application; and
FIG. 10 is a diagram of a structure of a communication system 1000 according to an embodiment of this application.

### DESCRIPTION OF EMBODIMENTS

Various failures occur during network running, affecting normal running of a network. In addition to a link failure and congestion, the various failures further include some gray failures (gray failures). Understanding of the gray failure may include: Understanding 1: When a failure detection tool in a network observes that the network is healthy, and at least one application program in the network observes that the network is unhealthy, it is considered that the gray failure occurs in the network. Understanding 2: The gray failure is a hardware failure that causes a non-instantaneous packet loss of traffic forwarded on a communication apparatus (such as a switch). The gray failures may include but are not limited to a silent failure, incorrect configuration, a routing black hole, a hardware failure, or physical port err-disable. A representation form of the gray failure may include but is not limited to a random packet loss, performance deterioration, or memory jitter. The random packet loss is used as an example. Connectivity detection sometimes shows a connection, and sometimes shows disconnection. Therefore, whether a failure exists cannot be determined through connectivity detection, and a service in the network is affected (for example, interrupted) by the packet loss.

The gray failure is common in the network and affects normal service running in the network. Therefore, to improve network performance, when the gray failure exists in the network, path switching needs to be performed in time, so that a service flow in the network can bypass a gray failure location to ensure normal service running. Currently, there may be two manners of implementing path switching when the gray failure occurs: Manner 1: An updated link status is notified on a control plane by using a protocol, and a communication apparatus that receives the notification updates a route based on the link status in the notification. In this way, when the service flow is transmitted in the network, routing may be performed again based on an updated route, thereby implementing path switching. Manner 2: A hash-based routing result is modified on a data plane. In this way, when the service flow is transmitted in the network, the service flow is introduced to another forwarding path based on a hash-based routing result after the modification, thereby implementing path switching.

Although path switching is implemented in the foregoing two manners, time taken for path switching is long, and a requirement of the gray failure for fast path switching cannot be met. For example, in the foregoing Manner 1, path switching needs to completely depend on protocol convergence, and time consumption may reach seconds, resulting in great impact of the gray failure on the service flow. In addition, because gray failures related to route path configuration, such as a configuration error and a routing black hole, cannot be discovered by using the protocol, path switching for the gray failures related to the route path configuration is not applicable. The foregoing Manner 2, to be specific, a manner of modifying the hash-based routing result to implement path switching, is equivalent to directly switching the service flow from a forwarding path to another forwarding path, and has the following problems: 1. Load balance cannot be ensured. 2. Because the gray failure cannot be accurately located, a forwarding path in a specific direction is easily switched from a normal path to a failure path including the gray failure location after path switching. 3. A communication apparatus that does not support direct offset of a hash result exists in the network. As a result, the method cannot be popularized in the network. 4. Additional control plane processing is required for implementation, which increases time consumed for path switching.

Based on this, to perform path switching in time after a gray failure occurs, enable recovery time of a service flow to be short enough after the gray failure occurs, and mitigate impact of the gray failure on a service, an embodiment of this application provides a packet processing method. For a to-be-transmitted first packet, a first communication apparatus can obtain hash_key based on the first packet, and can also obtain a first path selecting parameter (which may be denoted as seed below) of a flow corresponding to the first packet. Therefore, a first path for sending the first packet is determined based on hash_key and seed, and the first packet is sent through the first path. Both hash_key and seed are used by the first communication apparatus to determine the path for sending the first packet. In this way, the communication apparatus only needs to perform, when forwarding a packet after sensing a gray failure, hash-based routing based on hash_key in the packet and seed of a flow to which the packet belongs, to implement fast path switching when the gray failure occurs, without implementing path switching through protocol convergence on a control plane, and without implementing path switching by locally modifying, by the communication apparatus, a hash-based routing result on a data plane. This simplifies configuration work that needs to be implemented during path switching, and reduces time overheads of path switching, so that path switching can be performed in time after the gray failure occurs, and recovery time of a service flow is short enough to minimize impact of the gray failure on a service.

If the first communication apparatus is an ingress node, in a case, that the first communication apparatus obtains the first path selecting parameter of the flow corresponding to the first packet may include: The first communication apparatus determines the first path selecting parameter based on a parameter carried in the first packet. Alternatively, in another case, the first communication apparatus may locally maintain a flow table corresponding to each service flow, and the flow table includes a path selecting parameter. In this case, that the first communication apparatus obtains the first path selecting parameter of the flow corresponding to the first packet may include: The first communication apparatus determines, from the locally maintained flow table, a target flow table that matches the flow corresponding to the first packet, and obtains the first path selecting parameter from the target flow table.

If the first communication apparatus is an intermediate node, when the first packet is processed on an ingress node, the ingress node may include the first path selecting parameter in the first packet. In this case, after receiving the first packet, the first communication apparatus may obtain the first path selecting parameter by parsing the first packet. For example, each communication apparatus locally maintains flow tables corresponding to different service flows, and the flow tables may include at least hash_key and seed. That the ingress node receives the first packet is used as an example. The packet processing method provided in this embodiment of this application may include: The ingress node receives the first packet that matches a value of hash_key in the target flow table, and a value of seed in the target flow table is a first value. In this case, the ingress node includes the first value in the first packet to obtain an updated first packet, and forwards the updated first packet to the first communication apparatus through the first path based on the value of hash_key and the first value that are in the updated first packet. In this way, the first communication apparatus only needs to perform hash-based routing based on the value of hash_key and the value of seed that are carried in the received packet, to implement fast path switching when the gray failure occurs.

In addition, an embodiment of this application further provides a packet processing method. Corresponding to a transmit end of the foregoing first packet, a receive end (namely, a third communication apparatus) of the first packet determines, after receiving the first packet from a first communication apparatus, that the first packet includes hash_key, a first path selecting parameter, and a path switching identifier, where the path switching identifier indicates the third communication apparatus to perform path switching. In this case, the third communication apparatus modifies, based on an indication of the path switching identifier, a path selecting parameter in a target flow table in which hash_key is located, where after the modification, the target flow table includes the first path selecting parameter, and the first path selecting parameter in the target flow table is used by the third communication apparatus to determine a path for sending a packet belonging to a backward flow of the first packet. In this way, after the first communication apparatus performs path switching, the peer-end third communication apparatus modifies a value of seed in a local related flow table based on the indication of the path switching identifier in the packet, to prepare for path switching of the backward service flow. Because it is difficult to locate a failure occurrence location when a gray failure occurs, in this embodiment of this application, bidirectional path switching is implemented in time, so that a service flow bypasses the failure location during transmission in a network with a higher probability, and impact of the gray failure on a service can be minimized.

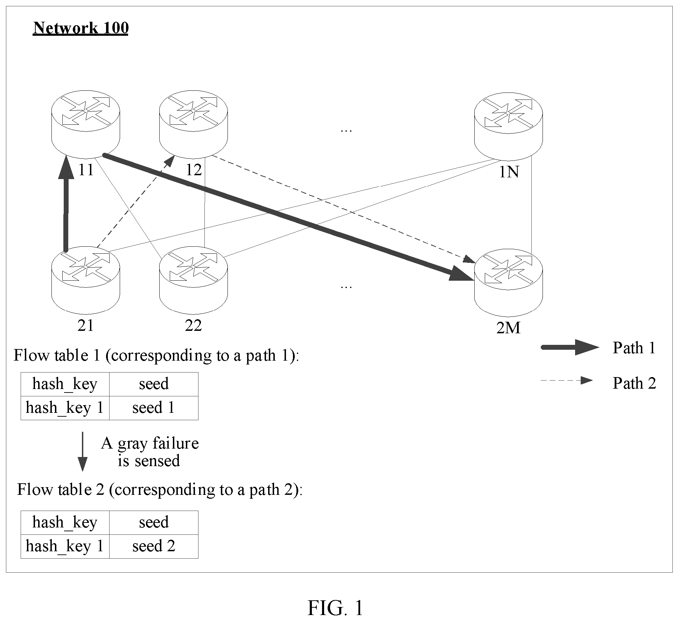

To make the technical solutions provided in embodiments of this application clearer, the following briefly describes the method in embodiments of this application with reference to an example scenario shown in FIG. 1.

FIG. 1 is a diagram of an architecture of a network 100 according to an embodiment of this application. The network 100 may include at least a communication apparatus 11, a communication apparatus 12, ..., a communication apparatus 1N (where N is an integer greater than or equal to 1), a communication apparatus 21, a communication apparatus 22, ..., and a communication apparatus 2M (where M is an integer greater than or equal to 1, and M is greater than or equal to N). Each communication apparatus is connected to each communication apparatus 2j, where i=1, 2, ..., or N, and j=1, 2, ..., or M. For example, the network 100 may be a data center network, a communication apparatus 1i corresponds to a spine (Spine) node in the data center network, and the communication apparatus 2j corresponds to a leaf (Leaf) node in the data center network.

An example in which there are two equivalent paths (that is, a path 1 and a path 2) from the communication apparatus 21 to the communication apparatus 2M is used to describe a hash-based routing process on each communication apparatus in a current method and the method provided in embodiments of this application. The path 1 sequentially passes through the communication apparatus 21, the communication apparatus 11, and the communication apparatus 2M, and the path 2 sequentially passes through the communication apparatus 21, the communication apparatus 12, and the communication apparatus 2M.

Currently, the communication apparatus 21 may maintain a correspondence 1 between the path 1 and hash_key 1 and a correspondence 2 between the path 2 and hash_key 2. When a to-be-transmitted packet has the path 1 and the path 2 as equivalent paths, the communication apparatus 21 obtains hash_key from the to-be-transmitted packet. If obtained hash_key is hash_key 1, the correspondence 1 is matched based on obtained hash_key 1, and it is determined that the to-be-transmitted packet is forwarded based on the path 1 in the correspondence 1. If obtained hash_key is hash_key 2, the correspondence 2 is matched based on obtained hash_key 2, and it is determined that the to-be-transmitted packet is forwarded based on the path 2 in the correspondence 2. hash_key may be all or a part of features of a service flow. The feature of the service flow may be, for example, a quintuple (to be specific, a source internet protocol (Internet Protocol, IP) address, a source port, a destination IP address, a destination port, and a transport layer protocol) of the service flow. In this case, hash_key may be a quintuple or a triplet (which may include, for example, a source IP address, a destination IP address, and a transport layer protocol) of the service flow.

In the method provided in embodiments of this application, in addition to hash_key used for current hash-based routing, a parameter participating in hash-based routing further includes seed. The communication apparatus 21 maintains a flow table corresponding to each service flow. For example, the communication apparatus 21 may maintain a flow table 1 that includes at least hash_key 1 and seed 1. In addition, the communication apparatus 21 may further maintain a correspondence between each hash-based path selecting parameter and a path, for example, a correspondence 3 between hash_key 1+seed 1 and the path 1 and a correspondence 4 between hash_key 1+seed 2 and the path 2. An example in which a value of seed 1 in the flow table 1 in an initial state is equal to 0 is used. If the communication apparatus 21 does not sense a gray failure, when there is a to-be-transmitted packet 1 on the communication apparatus 21, and an equivalent path for transmitting the to-be-transmitted packet 1 includes the path 1, the communication apparatus 21 obtains hash_key 1 from the to-be-transmitted packet 1, obtains seed 1 from the flow table 1, matches the correspondence 3 based on obtained hash_key 1+seed 1, and determines to forward the to-be-transmitted packet 1 based on the path 1 in the correspondence 3. If the communication apparatus 21 senses that a gray failure occurs in a service flow corresponding to hash_key 1, the communication apparatus 21 modifies seed 1 in the flow table 1 to seed 2 to obtain a flow table 2. The flow table 2 includes at least hash_key 1 and seed 2, and a value of seed 2 may be, for example, equal to 1. When there is a to-be-transmitted packet 2 on the communication apparatus 21, and an equivalent path for transmitting the to-be-transmitted packet 2 includes the path 1, the communication apparatus 21 includes seed 2 in the flow table 2 in the to-be-transmitted packet 2 to obtain a to-be-transmitted packet 3, so as to match the correspondence 4 based on hash_key 1+seed 2, and determine to forward the to-be-transmitted packet 3 based on the path 2 in the correspondence 4. In this way, a parameter participating in hash-based routing is added (that is, seed is added), and a flow table including all parameters participating in hash-based routing is locally maintained in a communication apparatus. After sensing a gray failure, the communication apparatus modifies a value of seed in a corresponding flow table, includes, after receiving a packet matching the flow table, a value of seed in the flow table after the modification in the packet, and selects a path based on updated hash _key+seed, to implement fast path switching when the gray failure occurs, so that recovery time of a service flow is short enough to minimize impact of the gray failure on a service.

In addition, because a specific location where a failure occurs cannot be located, to further improve network reliability, it is generally required that path switching is performed on a bidirectional path of the service flow after the gray failure is sensed. In this embodiment of this application, in addition to hash_key and seed, the flow table may further include a seed changed (seed _changed) entry. seed _changed indicates whether the value of seed in the flow table changes. A value of seed_changed may be further used to determine whether a path switching identifier is added to a to-be-transmitted packet. For example, when the value of seed _changed is not equal to 0, it indicates that the value of seed in the flow table in which seed _changed is located changes, and it is determined that the path switching identifier needs to be added to the to-be-transmitted packet. When the value of seed _changed is equal to 0, it indicates that the value of seed in the flow table in which seed_changed is located does not change, and it is determined that the path switching identifier does not need to be added to the to-be-transmitted packet. The path switching identifier may be, for example, a flag (flag) that can be defined in the to-be-transmitted packet. The path switching identifier indicates whether a receiver of the to-be-transmitted packet needs to perform path switching. For example, if a value of the path switching identifier in the to-be-transmitted packet 1 is equal to 0, it indicates that the receiver (namely, the communication apparatus 2M) does not need to perform path switching. In other words, after receiving the to-be-transmitted packet 1, the communication apparatus 2M determines, based on the path switching identifier whose value is 0 in the to-be-transmitted packet 1, that a path switching operation does not need to be performed. If a value of the path switching identifier in the to-be-transmitted packet 3 is equal to 1, it indicates that the communication apparatus 2M needs to perform path switching. In other words, after receiving the to-be-transmitted packet 3, the communication apparatus 2M determines, based on the path switching identifier whose value is 1 in the to-be-transmitted packet, to perform a path switching operation.

In this embodiment of this application, for example, a manner of sensing the gray failure by the communication apparatus may include but is not limited to the following: Manner 1: The communication apparatus performs statistics collection and comparison on inbound and outbound traffic of each service flow, to determine whether a gray failure corresponding to the service flow may exist. Manner 2: The communication apparatus performs statistics collection and comparison on quantities of requests and responses that occur, to determine whether a gray failure corresponding to the service flow may exist. Manner 3: The communication apparatus senses an event such as a packet loss or whether a response is received within specific time, and determines whether a gray failure corresponding to the service flow may exist. Generally, the communication apparatus detects, based on hash_key, whether a gray failure exists in a service flow corresponding to hash_key. Therefore, when sensing a specific gray failure, the communication apparatus may determine a service flow associated with the gray failure.

In this embodiment of this application, an execution entity may be any communication apparatus that can transmit a packet, for example, may be an edge device (such as a top of rack (Top of Rack, TOR) switch) in the data center network. Refer to FIG. 1. The communication apparatus 21 may be, for example, a TOR switch 21, and the communication apparatus 2M may be, for example, a TOR switch 2M. In a direction from the communication apparatus 21 to the communication apparatus 2M, the TOR switch 21 may be understood as a sender (sender) TOR switch, and the TOR switch 2M is a receiver (receiver) TOR switch. In a direction from the communication apparatus 2M to the communication apparatus 21, the TOR switch 21 may be understood as a receiver TOR switch, and the TOR switch 2M is a sender TOR switch. Each communication apparatus may correspond to different roles based on locations and directions on transmission paths of different traffic. However, each communication apparatus has a function of performing the method provided in embodiments of this application as a sender and a receiver.

It should be understood that FIG. 1 shows only an example of a communication apparatus and a connection relationship in a network. The network may include any other quantity of communication apparatuses and another connection relationship. This is not limited in this embodiment of this application. The network architecture shown in FIG. 1 is merely an example for description. An application scenario of the method provided in embodiments of this application is not limited to the scenario shown in FIG. 1.

In embodiments of this application, the communication apparatus may be a network device such as a switch, a router, a service network interface card, or a virtual switch, or a terminal device such as a mobile phone or a notebook computer; or may be some components in a network device or a terminal device, for example, a board or a line card in the network device; or may be a function module in a network device or a terminal device; or may be a chip configured to implement the method provided in embodiments of this application. This is not specifically limited in embodiments of this application. When the communication apparatus is a chip, a transceiver unit configured to implement the method may be, for example, an interface circuit of the chip, and a processing unit may be a processing circuit having a processing function in the chip. The communication apparatuses may be directly connected to each other by using, for example, but not limited to, an Ethernet cable or an optical cable. For example, in FIG. 1, the communication apparatus 21 and the communication apparatus 2M may be terminal-side devices of a service. For example, the communication apparatus 21 is user equipment of the service, and the communication apparatus 2M is a server. For another example, the communication apparatus 21 and the communication apparatus 2M may alternatively be network-side devices of a service. For example, the communication apparatus 21 is an ingress network device (also referred to as a head node or an ingress node) of the service, and the communication apparatus 2M is an egress network device (also referred to as a tail node or an egress node) of the service.

In embodiments of this application, the communication apparatus and the node represent a same meaning, and may be alternately understood and used.

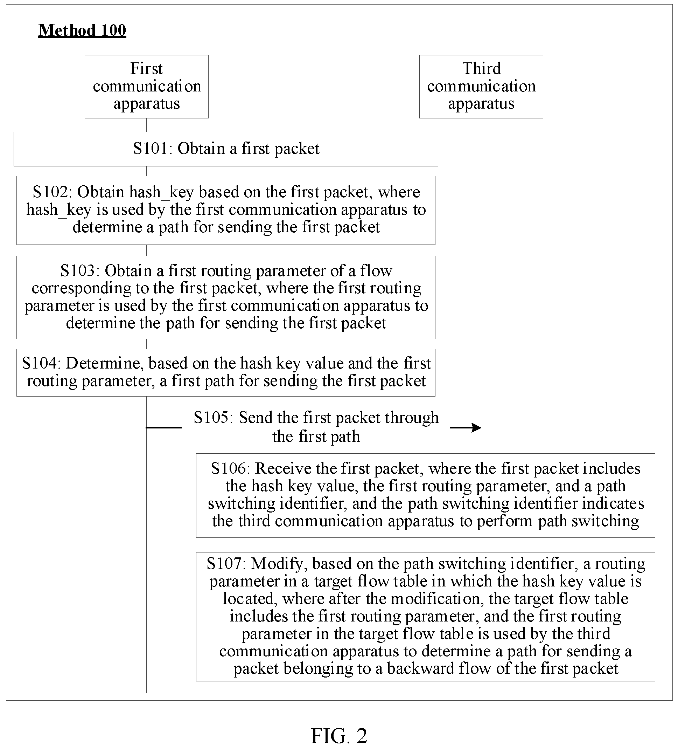

To describe embodiments of this application more clearly, the following describes a packet processing method provided in an embodiment of this application with reference to FIG. 2.

FIG. 2 is a schematic flowchart of a packet processing method 100 according to an embodiment of this application. In the method 100, embodiments of this application are described in a manner of interaction between a first communication apparatus and a third communication apparatus. The first communication apparatus and the third communication apparatus may be any two communication apparatuses that can transmit a packet in a network, for example, may be edge devices of the network. Corresponding to the scenario shown in FIG. 1, the first communication apparatus may correspond to the communication apparatus 21, and the third communication apparatus may correspond to the communication apparatus 2M.

As shown in FIG. 2, the method 100 may include, for example, the following S101 to S107.

S101: The first communication apparatus obtains a first packet.

In an example, if the first communication apparatus is a 1^{st} node that the first packet passes through and that supports the method 100 provided in this embodiment of this application, that is, the first communication apparatus is an ingress node of a subsequently determined first path, the first packet may not carry a path selecting parameter. In this example, S101 may include: The first communication apparatus receives or generates the first packet.

In another example, if the first communication apparatus is not a 1^{st} node that the first packet passes through and that supports the method 100 provided in this embodiment of this application, that is, the first communication apparatus is an intermediate node of a subsequently determined first path, the first packet may carry a path selecting parameter. In this example, S101 may include: The first communication apparatus receives the first packet sent by an ingress node of the first packet, and obtains the first packet in S101 based on processing of the received first packet.

S102: The first communication apparatus obtains hash_key based on the first packet, where hash_key is used by the first communication apparatus to determine the path for sending the first packet.

In an example, S102 may include: The first communication apparatus parses the first packet, and obtains hash_key from the first packet, where hash_key may be, for example, all or a part of a quintuple of the first packet, and different packets of a same service flow have a same quintuple or a same triplet. An example in which hash_key is the quintuple of the service flow is used for description below.

S103: The first communication apparatus obtains a first path selecting parameter of a flow corresponding to the first packet, where the first path selecting parameter is used by the first communication apparatus to determine the path for sending the first packet.

The path selecting parameter is a parameter that participates in hash-based routing together with hash_key in the method provided in this embodiment of this application. In a case, the path selecting parameter may be configured, by using a command line or the like, on a communication apparatus that supports the method provided in this embodiment of this application, or the path selecting parameter on the communication apparatus that supports the method provided in this embodiment of this application may be modified by using a command line or the like (for example, a second path selecting parameter is modified to the first path selecting parameter, or the first path selecting parameter is modified to the second path selecting parameter, where the first path selecting parameter and the second path selecting parameter may be different values of a same parameter, and the parameter may also be represented as a seed (seed) in this embodiment of this application). In another case, the path selecting parameter may alternatively be determined by using a specific parameter or some specific parameters in a service packet (or a data packet). A manner of modifying the path selecting parameter may include: modifying a value of the specific parameter or values of some specific parameters in the service packet, and/or modifying an operation manner of determining the path selecting parameter based on the specific parameter or some specific parameters.

In an example, S103 may include: The first communication apparatus obtains the first path selecting parameter based on the first packet. In a case, if the first communication apparatus is the ingress node of the first path, the first communication apparatus determines the first path selecting parameter based on a parameter carried in the first packet, and the parameter that is carried in the first packet and that is used to determine the first path selecting parameter may be flexibly selected based on a requirement. A manner of determining the first path selecting parameter based on the parameter carried in the first packet may also be flexibly designed based on a requirement. In another case, if the first communication apparatus is the intermediate node of the first path and supports the method provided in this embodiment of this application, when the first packet is processed on the ingress node of the first path, the ingress node may include the first path selecting parameter in the first packet. In this case, after receiving the first packet, the first communication apparatus may obtain the first path selecting parameter by parsing the first packet.

In another example, S103 may include: The first communication apparatus parses the first packet to obtain hash_key, determines, from locally maintained flow tables, a target flow table corresponding to hash_key, and obtains the first path selecting parameter from the target flow table.

An example in which the path selecting parameter is seed, and a value of seed corresponding to the first path selecting parameter is a first value is used for description below.

The first communication apparatus maintains a flow table corresponding to each service flow, and traffic may include at least a parameter participating in hash-based routing. In a case, the flow table includes hash_key of the service flow, and seed may be understood as a parameter in hash_key. hash_key includes all parameters used for hash-based routing. In this case, hash_key may include, for example, the quintuple+seed of the service flow. In another case, the flow table includes hash_key and seed of the service flow, and hash_key and seed are two parts of parameters used for hash-based routing. In this embodiment of this application, an example in which the flow table includes hash_key and seed is used for description.

An example in which the first communication apparatus is the ingress node of the first path is used. The target flow table is a flow table that is in a plurality of flow tables maintained by the first communication apparatus and that corresponds to a first service flow to which the first packet belongs. The first service flow includes a forward service flow and a backward service flow. The target flow table maintained by the first communication apparatus may be understood as a target flow table corresponding to the forward service flow in the first service flow, and a target flow table maintained by the third communication apparatus may be understood as a target flow table corresponding to the backward service flow in the first service flow. hash_key in the target flow table may include a quintuple of the first service flow, and a value of seed in the target flow table is determined depending on whether the first communication apparatus senses a gray failure and based on a rule of modifying the value of seed after the first communication apparatus senses the gray failure.

In an example, the target flow table may be shown in the following Table 1.

**Table 1 Target flow table**

| hash_key | | | | | seed |
|---|---|---|---|---|---|
| SIP | DIP | SPort | SPort | Protocol | |
| IP address 1 | IP address 2 | Port 1 | Port 2 | Protocol 1 | First value |

In Table 1, SIP represents a source IP address, DIP represents a destination IP address, SPort represents a source port, DPort represents a destination port, and Protocol represents a transport layer protocol. For a value of hash_key in the target flow table, refer to Table 1. The value of hash_key is <the IP address 1, the IP address 2, the port 1, the port 2, and the protocol 1>. The value of seed is the first value, and corresponds to the first path selecting parameter in S103.

To notify, by using a specific packet of a service flow after a gray failure that exists in a path corresponding to the service flow is discovered, a peer-end communication apparatus of the service flow to perform a path switching operation, to enable the service flow to bypass the gray failure in two directions as much as possible, and ensure network reliability with a higher probability, the flow table may further include seed _changed, where seed_changed indicates whether seed corresponding to the service flow changes. If a value of seed _changed indicates that seed corresponding to the service flow changes, a path switching identifier may be carried in a packet that belongs to the service flow and that is transmitted by the communication apparatus, and the path switching identifier is set to 1, to notify the peer-end communication apparatus that receives the packet to perform the path switching operation.

In another example, the target flow table may be shown in the following Table 2.

**Table 2 Target flow table**

| hash_key | | | | | seed | seed_changed |
|---|---|---|---|---|---|---|
| SIP | DIP | SPort | SPort | Protocol | | |
| IP address 1 | IP address 2 | Port 1 | Port 2 | Protocol 1 | First value | Second value |

In Table 2, the value of hash_key in the target flow table is <the IP address 1, the IP address 2, the port 1, the port 2, and the protocol 1>. The value of seed is the first value, and a value of seed _changed is the second value.

When sensing that a gray failure occurs on a transmission path of the first service flow, the first communication apparatus modifies the value of seed (or values of seed and seed _changed) in the target flow table to obtain the target flow table shown in Table 1 (or Table 2), and then performs the operation corresponding to S103. Before S103, the method 100 may further include: when it is determined that a gray failure that affects the flow corresponding to the first packet exists in the network, modifying a value of a path selecting parameter in the target flow table, where after the modification, the target flow table includes the first path selecting parameter. An example in which the target flow table includes the seed_changed entry, and the first path selecting parameter corresponds to the first value of seed is used. When determining that the gray failure that affects the first service flow exists in the network, the first communication apparatus modifies the value of seed and the value of seed-changed in the target flow table corresponding to the first service flow, where after the modification, the value of seed is the first value, and after the modification, the value of seed-changed is the second value. The value of seed in the target flow table may be modified based on any algorithm. For example, the value of seed in the target flow table may be increased by 1 to obtain the value of seed in the target flow table after the modification. For another example, a first formula may be performed on the value of seed in the target flow table to obtain the value of seed in the target flow table after the modification. For example, the first formula may be: seed=2*seed+3, where seed before the equal sign indicates seed in the target flow table after the modification, and seed after the equal sign is seed in the target flow table before the modification. Similarly, the value of seed _changed in the target flow table may be modified based on any algorithm. For example, the value of seed_changed in the target flow table may be increased by 1 to obtain the value of seed_changed in the target flow table after the modification. For another example, a second formula may be performed on the value of seed _changed in the target flow table to obtain the value of seed_changed in the target flow table after the modification. For example, the second formula may be: seed _changed=3*seed+2, where seed _changed before the equal sign indicates seed_changed in the target flow table after the modification, and seed _changed after the equal sign is seed _changed in the target flow table before the modification. Alternatively, modifying the value of seed _changed in the target flow table may be modifying the value of seed_changed to a preset fixed value.

In an example, assuming that before the modification, the target flow table includes the second path selecting parameter, before the target flow table shown in Table 2 is obtained, the method 100 may further include the following steps. S100a: The first communication apparatus receives a second packet, where the second packet and the first packet belong to a same flow. S 100b: The first communication apparatus obtains the hash key value based on the second packet. S 100c: The first communication apparatus obtains the second path selecting parameter of a flow corresponding to the second packet, where the second path selecting parameter is used by the first communication apparatus to determine a path for sending the second packet. S100d: The first communication apparatus determines, based on the hash key value and the second path selecting parameter, a second path for sending the second packet. S100e: The first communication apparatus sends the second packet through the second path. An example in which a value of seed corresponding to the second path selecting parameter is a fourth value is used for description below.

The fourth value may be, for example, equal to 0. In a process of performing S100a to S100e, the value of seed_changed in the target flow table may be 0. When the first communication apparatus does not sense that the gray failure corresponding to the first service flow exists, the first communication apparatus determines, based on hash_key in the second packet and the fourth value, that a hash-based routing result of the second packet is the second path. Corresponding to the embodiment shown in FIG. 1, the second path may correspond to, for example, a path 1. When sensing that the gray failure corresponding to the first service flow exists, the first communication apparatus may modify the value of seed in the target flow table from 0 to 1, that is, the first value is 1. When receiving the first packet belonging to the first service flow, the first communication apparatus determines, based on hash_key and the first value, that the hash-based routing result of the first packet is the first path. Corresponding to the embodiment shown in FIG. 1, the second path may correspond to, for example, the path 1 in FIG. 1, and the first path may correspond to, for example, the path 2 in FIG. 1.

After the first communication apparatus senses that the gray failure corresponding to the first service flow exists, processing on the received first packet may include: The first communication apparatus updates the first packet based on the first path selecting parameter, where an updated first packet includes the first path selecting parameter (that is, the first value).

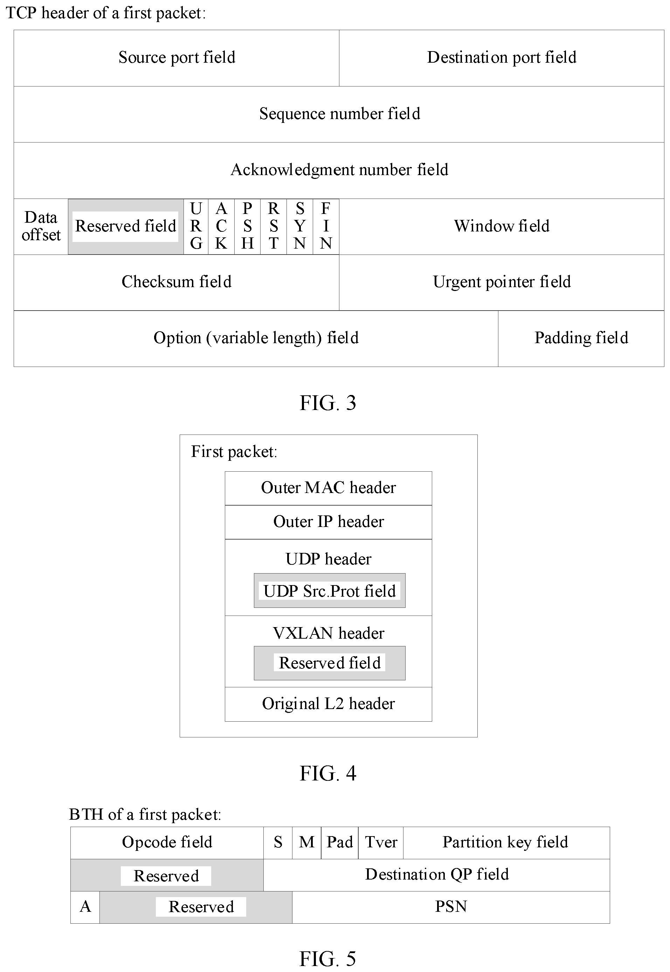

In an example, when the updated first packet is a transmission control protocol (Transmission Control Protocol, TCP) packet, the first communication apparatus may include the first value in any field that can be used in a TCP header of the first packet. For example, the TCP header of the first packet may include a reserved (Reserved) field, and the first value may be carried by using the Reserved field. A scenario to which this example is applicable may be, for example, a non-virtual extensible local area network (Virtual Extensible Local Area Network, VXLAN) scenario. For a structure of the TCP header of the first packet, refer to FIG. 3. The TCP header may include a source port field, a destination port field, a sequence number field, an acknowledgment number field, a data offset field, a Reserved field, URG, ACK, PSH, RST, SYN, FIN, a window field, a checksum field, an urgent pointer field, an option (variable length) field, and a padding field. The first communication apparatus includes the first value in the Reserved field of the TCP header shown in FIG. 3.

In another example, when the updated first packet is a VXLAN packet, the first communication apparatus may include the first value in any field that can be used in a VXLAN header or a user datagram protocol (User Datagram Protocol, UDP) header of the first packet. For example, the UDP header of the first packet may include a UDP source port (UDP Src.Prot) field, and the first value may be carried by using the UDP Src.Prot field. For another example, the VXALN header of the first packet may include a Reserved field, and the first value may be carried by using the Reserved field. A scenario to which this example is applicable may be, for example, a VXLAN scenario. For a structure of the first packet, refer to FIG. 4. The first packet may sequentially include an outer media access control (Media Access Control, MAC) header, an outer IP header, a UDP header, a VXLAN header, and an original layer 2 (Original L2) header from outside to inside. The UDP header may include a UDP Src.Prot field, and the VXLAN header may include a Reserved field. The first communication apparatus includes the first value in the UDP Src.Prot field of the UDP header or the Reserved field of the VXLAN header shown in FIG. 4.

In still another example, when the updated first packet is a remote direct memory access (Remote Direct Memory Access, RDMA) packet, the first communication apparatus may include the first value in any field that can be used in a base transport header (Base Transport Header, BTH) of the first packet. For example, the BTH of the first packet may include a Reserved field, and the first value may be carried by using the Reserved field. A scenario to which this example is applicable may be, for example, an RDMA scenario. For a structure of the first packet, refer to FIG. 5. The BTH of the first packet may include: an Opcode field, S, M, Pad, a transport header version (Transport Header Version, TVer) field, a partition key (Partition Key) field, a Reserved (rsvd for short) field, a destination queue pair (Destination Queue Pair, Destination QP) field, A, and a packet sequence number (Packet Sequence Number, PSN) field. The Opcode field indicates a type (type) of the first packet or a protocol type of a higher layer in an infiniband payload (InfiniBand payload, IB payload). S is an abbreviation of a solicited event (Solicited Event), indicating that an event should be generated by a responder. M is an abbreviation of MigReq, and is generally used for migrating a state. Pad indicates how many extra bytes are padded to the IB payload. TVer indicates a version number of the first packet. Partition Key indicates a logical memory partition associated with the first packet. The Destination QP field indicates a sequence number of a destination queue pair. A is an abbreviation of an acknowledgment request (Acknowledgment Request), indicating that a response to the first packet may be scheduled by a responder. The PSN is used for detecting lost or repeated data packets. The first communication apparatus includes the first value in the Reserved field of the BTH shown in FIG. 5.

In some possible implementations, for example, that the first communication apparatus updates the first packet based on the first path selecting parameter may include: The first communication apparatus obtains first indication information (corresponding to the second value) of the flow corresponding to the first packet, where the first indication information indicates the first communication apparatus to modify a path selecting parameter; and the first communication apparatus updates the first packet based on the first indication information, where the updated first packet includes a path switching identifier corresponding to the first indication information, the path switching identifier indicates the third communication apparatus to perform path switching, and the third communication apparatus is a destination node of the first packet. Obtaining the first indication information of the flow corresponding to the first packet may include: obtaining the first indication information from a target flow table in which the hash key value is located. In this case, the method may further include: updating the first indication information in the target flow table to second indication information (that is, a third value), where the second indication information indicates that the first communication apparatus does not modify the path selecting parameter. In this way, when receiving another packet belonging to the first service flow, the first communication apparatus does not add the path switching identifier to the another packet. This avoids a case in which when the first communication apparatus senses, once, that the gray failure corresponding to the first service flow occurs, the third communication apparatus continuously receives a packet carrying the path switching identifier, and continuously performs a path switching operation.

An example in which a value of seed-changed corresponding to the first indication information is the second value, and a value of seed-changed corresponding to the second indication information is the fourth value is used for description below.

If the target flow table further includes seed-changed, the value of seed-changed is the second value, and the second value indicates that the value of seed in the target flow table changes, the first communication apparatus includes the first value and the path switching identifier in the first packet based on the second value of seed-changed, to obtain the updated first packet, where the path switching identifier indicates the third communication apparatus to perform path switching. The second value may be any value greater than 0. For example, the second value may be equal to 1. When the value of seed-changed is not equal to the third value, it is considered that the value of seed-changed is the second value. After modifying the value of seed and the value of seed-changed that are in the target flow table, the first communication apparatus adds, based on an indication of the second value, the path switching identifier only to any packet that matches the target flow table. Once the path switching identifier is added to a specific packet, the first communication apparatus may modify the value of seed-changed in the target flow table to the third value. The third value may be, for example, equal to 0. In this way, a case in which the first communication apparatus adds path switching identifiers to a plurality of packets, and consequently, a peer end (namely, the third communication apparatus) triggers a plurality of path switching operations after receiving the plurality of packets that carry the path switching identifiers is avoided. This case not only increases unnecessary overheads of a network, but also easily causes the third communication apparatus to re-switch, after the plurality of path switching operations, the first service flow back to a location at which the gray failure occurs.

In an example, after the first communication apparatus modifies the value of seed-changed in the target flow table to the third value, the method 100 may further include: The first communication apparatus receives a third packet, where the third packet matches hash_key in the target flow table, and the target flow table further includes seed; the first communication apparatus includes the first value in the third packet based on the third value of seed-changed, to obtain an updated third packet; and the first communication apparatus forwards the updated third packet to the third communication apparatus through the first path based on the value of hash_key and the first value. In this way, after the first communication apparatus adds the path switching identifier only to any one of the plurality of packets, only the value (that is, the first value) of seed is added to another packet. This not only reduces network overheads, but also avoids a case in which the third communication apparatus performs the plurality of path switching operations.

S104: The first communication apparatus determines, based on the hash key value and the first path selecting parameter, the first path for sending the first packet.

S105: The first communication apparatus sends the first packet through the first path.

It should be noted that, for an implementation of S104, refer to a current hash-based routing manner. A difference lies in that a parameter participating in hash-based routing in S104 includes the value (to be specific, <the IP address 1, the IP address 2, the port 1, the port 2, and the protocol 1>) of hash _key carried in the first packet and the first path selecting parameter (that is, the first value of seed).

After S104, the first communication apparatus obtains a hash-based routing result: the first path, to forward the first packet through the first path. The first path may refer to, for example, a segment that starts from the first communication apparatus and that is of a total path from the first communication apparatus to a fourth communication apparatus, an egress node of the first path is the third communication apparatus, and the fourth communication apparatus is a destination host of the first packet or a destination node in the network.

In some possible implementations, if an intermediate node between the first communication apparatus and the third communication apparatus has a function of performing the method provided in this embodiment of this application, after receiving the first packet, the intermediate node may read the first value from the first packet, perform hash-based routing based on the first value+the value of hash_key, and determine a forwarding path, to forward the packet based on the determined forwarding path. An example in which the first path includes an intermediate node, which is a second communication apparatus, is used. The second communication apparatus determines, based on the first path selecting parameter and the hash key value that are in the updated first packet, the path for transmitting the first packet. The value of hash _key may be read from the first packet. The intermediate node has a function of performing the method provided in this embodiment of this application. It may be understood as that the intermediate node supports performing hash-based routing based on the values of seed+hash_key.

In some other possible implementations, if an intermediate node between the first communication apparatus and the third communication apparatus does not have a function of performing the method provided in this embodiment of this application, after receiving the first packet, the intermediate node may perform hash-based routing based on the value of hash_key, and determine a forwarding path, to forward the packet based on the determined forwarding path. The value of hash_key may be read from the first packet.

It should be noted that the intermediate node may not maintain a flow table, to save configuration overheads of the intermediate node. Alternatively, the intermediate node may maintain a flow table, and the flow table may not include the seed option and the seed _changed option. If the intermediate node maintains the target flow table, the intermediate node may alternatively obtain the value of hash key from the target flow table.

S106: The third communication apparatus receives the first packet from the first communication apparatus, where the first packet includes the hash key value, the first path selecting parameter, and the path switching identifier, and the path switching identifier indicates the third communication apparatus to perform path switching.

S107: The third communication apparatus modifies, based on the path switching identifier, a path selecting parameter in the target flow table in which the hash key value is located, where after the modification, the target flow table includes the first path selecting parameter, and the first path selecting parameter in the target flow table is used by the third communication apparatus to determine a path for sending a packet belonging to a backward flow of the first packet.

An example in which the target flow table maintained by the first communication apparatus is shown in Table 2 is used. For the target flow table maintained by the third communication apparatus, refer to the following Table 3.

**Table 3 Target flow table**

| hash_key | | | | | seed | seed_changed |
|---|---|---|---|---|---|---|
| SIP | DIP | SPort | SPort | Protocol | | |
| IP address 2 | IP address 1 | Port 2 | Port 1 | Protocol 1 | Fourth value | Third value |

Alternatively, for the target flow table maintained by the third communication apparatus, refer to the following Table 4.

**Table 4 Target flow table**

| hash_key | | | | | seed | seed_changed |
|---|---|---|---|---|---|---|
| SIP | DIP | SPort | SPort | Protocol | | |
| IP address 2 | IP address 1 | Port 2 | Port 1 | Protocol 1 | First value | Third value |

It should be noted that algorithms for modifying the value of seed, algorithms for modifying the value of seed_changed, modification occasions, and the like may be considered to be the same for all communication apparatuses in the network.

When time at which the first communication apparatus senses the gray failure is earlier than time at which the third communication apparatus senses the gray failure, and the third communication apparatus has not modified the target flow table based on the gray failure when S106 is performed, for the target flow table maintained by the third communication apparatus, refer to the foregoing Table 3. The value of seed in the target flow table is the fourth value, which is different from the first value in the first packet. In this case, the third communication apparatus may modify the value of seed in the target flow table shown in Table 3. The value of seed in the target flow table after the modification may be the first value, and is consistent with a value of seed in the second packet.

When both the first communication apparatus and the third communication apparatus sense the gray failure, and the third communication apparatus has modified the target flow table based on the gray failure when S106 is performed, for the target flow table maintained by the third communication apparatus, refer to the foregoing Table 4. The value of seed in the target flow table is the first value, which is the same as the first value in the first packet. In this case, to further verify whether the value of seed in the target flow table on the third communication apparatus is modified after the gray failure is sensed this time, it may be further determined whether time in which the value of seed in the target flow table is modified exceeds a time threshold. If the time does not exceed the time threshold, it is considered that the value of seed in the target flow table on the third communication apparatus is modified after the gray failure is sensed this time, and the third communication apparatus may not modify the value of seed in the target flow table shown in Table 4. If the time exceeds the time threshold, it is considered that the value of seed in the target flow table on the third communication apparatus is modified before the gray failure is sensed this time, the third communication apparatus may modify the value of seed in the target flow table shown in Table 4, and the value of seed in the target flow table after the modification is not equal to the first value or the fourth value. In other words, for example, S107 may include: The third communication apparatus performs, based on the path switching identifier and a target condition, a step of modifying the value of seed in the target flow table that matches the value of hash-key. The target condition may include any one of the following conditions: The value of seed in the target flow table is consistent with the value of seed in the first packet, and the time in which the value of seed in the target flow table is modified exceeds the time threshold; and the value of seed in the target flow table is inconsistent with the value of seed in the first packet. If the value of seed in the target flow table is consistent with the value of seed in the first packet, and the time in which the value of seed in the target flow table is modified does not exceed the time threshold, the third communication apparatus does not perform the step of modifying the value of seed in the target flow table that matches the value of hash-key. Alternatively, it may be understood as that S107 may include: If the path switching identifier is valid, the third communication apparatus obtains modification time of the target flow table and a second path selecting parameter in the target flow table; and if the modification time has exceeded a preset time threshold and the second path selecting parameter is different from the first path selecting parameter, the third communication apparatus updates the second path selecting parameter in the target flow table to the first path selecting parameter.

Through S107, the target flow table corresponding to the first service flow on the third communication apparatus is modified, to prepare for implementing path switching of the backward service flow of the first service flow on the third communication apparatus.

In some possible implementations, the third communication apparatus processes and forwards the first packet. To be specific, after S106, the method 100 may further include: The third communication apparatus obtains a fourth packet based on the first packet, where the fourth packet does not include the path switching identifier and a value of seed in the fourth packet is zero; and the third communication apparatus forwards the fourth packet to the fourth communication apparatus. The fourth communication apparatus may be a terminal device such as a server connected to the third communication apparatus. In this way, path switching-related content in the first packet is deleted or set to 0 and then transmitted backwards, so that the fourth communication apparatus after the third communication apparatus does not sense modification caused by a path switching operation to the packet in the service flow, and the path switching operation does not affect processing of the packet in the service flow by the fourth communication apparatus.

It can be learned that, in the method 100, a communication apparatus only needs to modify, after sensing a gray failure, a value of seed in a flow table related to the gray failure. When forwarding a packet, the communication apparatus performs hash-based routing based on a value of hash_key and a value of seed of the to-be-forwarded packet, to implement fast path switching when the gray failure occurs, without implementing path switching through protocol convergence on a control plane, and without implementing path switching by locally modifying, by the communication apparatus, a hash-based routing result on a data plane. This simplifies configuration work that needs to be implemented during path switching, and reduces time overheads of path switching, so that path switching can be performed in time after the gray failure occurs, and recovery time of a service flow is short enough to minimize impact of the gray failure on a service. In addition, after the first communication apparatus performs path switching, the peer-end third communication apparatus modifies a value of seed in a local related flow table based on an indication of the path switching identifier in the packet, to prepare for path switching of a backward service flow. Because it is difficult to locate a failure occurrence location when the gray failure occurs, in this embodiment of this application, bidirectional path switching is implemented in time, so that the service flow bypasses the failure location during transmission in the network with a higher probability, and impact of the gray failure on the service can be minimized.

In the foregoing method 100, an example in which the first communication apparatus first senses the gray failure corresponding to the first service flow is used for description. In this embodiment of this application, there is also a case in which the third communication apparatus first senses the gray failure corresponding to the first service flow. In this case, the first communication apparatus may receive a fifth packet from the third communication apparatus, where the fifth packet includes a value of hash-key, a value of seed, and a path switching identifier. Then, the first communication apparatus modifies the value of seed in the target flow table. In addition, the first communication apparatus obtains a sixth packet based on the fifth packet, where the sixth packet does not include the path switching identifier and the value of seed is zero; and the first communication apparatus forwards the sixth packet to a fifth communication apparatus. The fifth communication apparatus may be a terminal device such as a server connected to the first communication apparatus. In this way, the first communication apparatus modifies the target flow table corresponding to the first service flow, to prepare for implementing path switching of the forward service flow of the first service flow on the first communication apparatus. In addition, path switching-related content in the fifth packet is deleted or set to 0 and then transmitted backwards, so that the fifth communication apparatus after the first communication apparatus does not sense modification caused by a path switching operation to the packet in the service flow, and the path switching operation does not affect processing of the packet in the service flow by the fifth communication apparatus.

It should be noted that the steps performed by the first communication apparatus, the second communication apparatus, and the third communication apparatus may be implemented independently of each other, or may be implemented together as an entire process. All the steps may be used as an embodiment provided in this application provided that an effect of a fast path switching design in this embodiment of this application can be implemented.

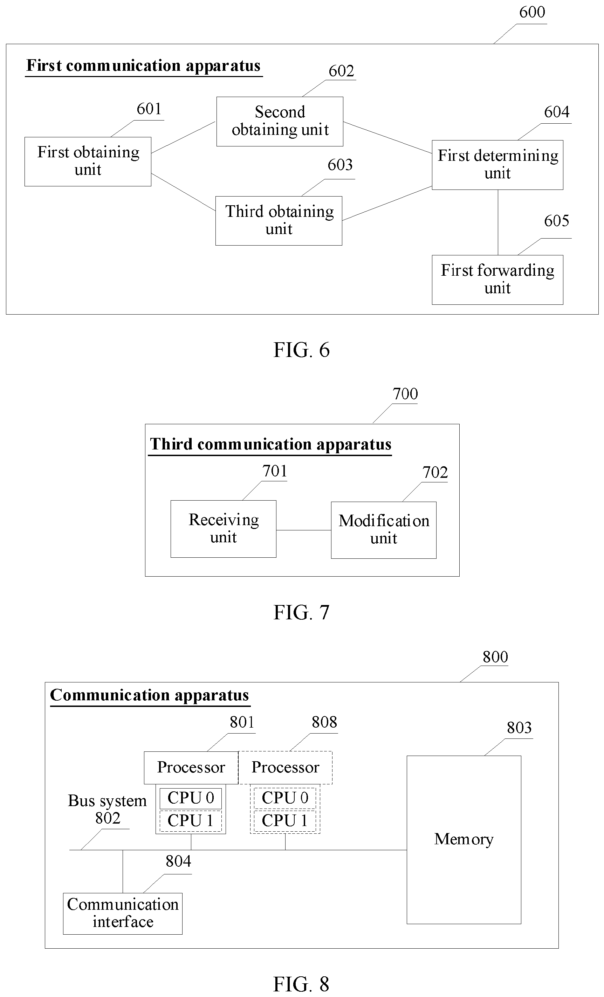

Correspondingly, an embodiment of this application further provides a packet processing apparatus 600. The apparatus 600 is used in a first communication apparatus, as shown in FIG. 6. The apparatus 600 may include: a first obtaining unit 601, a second obtaining unit 602, a third obtaining unit 603, a first determining unit 604, and a first forwarding unit 605.

The first obtaining unit 601 is configured to obtain a first packet. The first obtaining unit 601 may perform S101 shown in FIG. 2.

The second obtaining unit 602 is configured to obtain a hash key value based on the first packet, where the hash key value is used by the first communication apparatus to determine a path for sending the first packet. The second obtaining unit 602 may perform S102 shown in FIG. 2.

The third obtaining unit 603 is configured to obtain a first path selecting parameter of a flow corresponding to the first packet, where the first path selecting parameter is used by the first communication apparatus to determine the path for sending the first packet. The third obtaining unit 603 may perform S103 shown in FIG. 2.

The first determining unit 604 is configured to determine, based on the hash key value and the first path selecting parameter, a first path for sending the first packet. The first determining unit 604 may perform S104 shown in FIG. 2.

The first forwarding unit 605 is configured to send the first packet through the first path. The first forwarding unit 605 may perform S105 shown in FIG. 2.

In some implementations, the apparatus 600 may further include a first updating unit. The first updating unit is configured to update the first packet based on the first path selecting parameter, where an updated first packet includes the first path selecting parameter. The first forwarding unit is specifically configured to send the updated first packet through the first path.

In an example, for a second communication apparatus included in the first path, if the second communication apparatus supports the method provided in this application, the second communication apparatus may determine, based on the first path selecting parameter and the hash key value that are in the updated first packet, a forwarding path for forwarding the updated first packet. If the second communication apparatus does not support the method provided in this application, the second communication apparatus may determine, based on the hash key value in the updated first packet, a forwarding path for forwarding the updated first packet.

In an example, for different types of first packets, locations of carrying the first path selecting parameter in the first packets are also different. For example, if the updated first packet is a TCP packet, the updated first packet may carry the first path selecting parameter via a TCP header. For example, a Reserved field of the TCP header of the first packet carries the first path selecting parameter. For another example, if the updated first packet is a VXLAN packet, the updated first packet may carry the first path selecting parameter via a VXLAN header or a user datagram protocol, UDP header. For example, a UDP Src.Prot field of the UDP header or a Reserved field of the VXLAN header of the first packet carries the first path selecting parameter. For still another example, if the updated first packet is an RDMA packet, the updated first packet carries the first path selecting parameter via a BTH. For example, a Reserved field of the BTH of the first packet carries the first path selecting parameter.

In some implementations, the apparatus 600 may further include a fourth obtaining unit and a second updating unit. The fourth obtaining unit is configured to obtain first indication information of the flow corresponding to the first packet, where the first indication information indicates the first communication apparatus to modify a path selecting parameter. The second updating unit is configured to update the first packet based on the first indication information, where the updated first packet includes a path switching identifier corresponding to the first indication information, and the path switching identifier indicates a third communication apparatus to perform path switching.

In an example, the fourth obtaining unit is specifically configured to obtain the first indication information from a target flow table in which the hash key value is located. In this case, the apparatus may further include a third updating unit. The third updating unit is configured to update the first indication information in the target flow table to second indication information, where the second indication information indicates that the first communication apparatus does not modify the path selecting parameter.

In some implementations, if the first communication apparatus maintains the target flow table, the first obtaining unit 601 is specifically configured to obtain the first path selecting parameter from the target flow table.

In some other implementations, the first obtaining unit 601 is specifically configured to obtain the first path selecting parameter based on the first packet.

In some implementations, when the first communication apparatus maintains the target flow table, the apparatus 600 may further include: a modification unit, configured to: before the first path selecting parameter of the flow corresponding to the first packet is obtained, when it is determined that a gray failure that affects the flow corresponding to the first packet exists in a network, modify a value of a path selecting parameter in the target flow table, where after the modification, the target flow table includes the first path selecting parameter, and before the modification, the target flow table includes a second path selecting parameter.

In an example, the apparatus 600 may further include a receiving unit, a fifth obtaining unit, a sixth obtaining unit, a second determining unit, and a second forwarding unit. The receiving unit is configured to: before the value of the path selecting parameter in the target flow table is modified, receive a second packet, where the second packet and the first packet belong to a same flow. The fifth obtaining unit is configured to obtain the hash key value based on the second packet. The sixth obtaining unit is configured to obtain the second path selecting parameter of a flow corresponding to the second packet, where the second path selecting parameter is used by the first communication apparatus to determine a path for sending the second packet. The second determining unit is configured to determine, based on the hash key value and the second path selecting parameter, a second path for sending the second packet. The second forwarding unit is configured to send the second packet through the second path.

It should be noted that for a specific implementation and an achieved technical effect of the apparatus 600 provided in this application, refer to related descriptions of the implementation steps of the first communication apparatus in the method 100 shown in FIG. 2.

Correspondingly, an embodiment of this application further provides a packet processing apparatus 700. The apparatus 700 is used in a third communication apparatus, as shown in FIG. 7. The apparatus 700 may include a receiving unit 701 and a modification unit 702.

The receiving unit 701 is configured to receive a first packet from a first communication apparatus, where the first packet may include a hash key value, a first path selecting parameter, and a path switching identifier, and the path switching identifier indicates the third communication apparatus to perform path switching. The receiving unit 701 may perform S106 shown in FIG. 2.

The modification unit 702 is configured to modify, based on the path switching identifier, a path selecting parameter in a target flow table in which the hash key value is located, where after the modification, the target flow table includes the first path selecting parameter, and the first path selecting parameter in the target flow table is used by the third communication apparatus to determine a path for sending a packet belonging to a backward flow of the first packet. The modification unit 702 may perform S107 shown in FIG. 2.

In some implementations, the apparatus 700 may further include an obtaining unit and a sending unit. The obtaining unit is configured to obtain a second packet based on the first packet, where the second packet does not include the path switching identifier, and the first path selecting parameter in the second packet is set to zero. The sending unit is configured to forward the second packet to a fourth communication apparatus.

In some implementations, the modification unit 702 is specifically configured to: if the path switching identifier is valid, obtain modification time of the target flow table and a second path selecting parameter in the target flow table; and if the modification time has exceeded a preset time threshold and the second path selecting parameter is different from the first path selecting parameter, update the second path selecting parameter in the target flow table to the first path selecting parameter.

In an example, for different types of first packets, locations of carrying the first path selecting parameter in the first packets are also different. For example, if the first packet is a TCP packet, the first packet may carry the first path selecting parameter via a TCP header. For example, a Reserved field of the TCP header of the first packet carries the first path selecting parameter. For another example, if the first packet is a VXLAN packet, the first packet may carry the first path selecting parameter via a VXLAN header or a user datagram protocol, UDP header. For example, a UDP Src.Prot field of the UDP header or a Reserved field of the VXLAN header of the first packet carries the first path selecting parameter. For still another example, if the first packet is an RDMA packet, the first packet carries the first path selecting parameter via a BTH. For example, a Reserved field of the BTH of the first packet carries the first path selecting parameter.

It should be noted that for a specific implementation and an achieved technical effect of the apparatus 700 provided in this application, refer to related descriptions of the implementation steps of the third communication apparatus in the method 100 shown in FIG. 2.

In various possible implementations of the apparatus 600 and the apparatus 700, the first communication apparatus may be, for example, a switch, a router, a service network interface card, or a virtual switch.

Refer to FIG. 8. An embodiment of this application provides a communication apparatus 800. The communication apparatus 800 may be the communication apparatus in any one of the foregoing embodiments, for example, may be the communication apparatus 21, the communication apparatus 11, or the notification information 2M in FIG. 1, or may be the first communication apparatus, the second communication apparatus, or the third communication apparatus in FIG. 2. The communication apparatus 800 may implement functions of the communication apparatuses in the foregoing embodiments. The communication apparatus 800 includes at least one processor 801, a bus system 802, a memory 803, and at least one communication interface 804.

The communication apparatus 800 is an apparatus of a hardware structure, and may be configured to implement function modules in the packet processing apparatus 600 shown in FIG. 6. For example, a person skilled in the art may figure out that the second obtaining unit 602, the third obtaining unit 603, and the first determining unit 604 in the packet processing apparatus 600 shown in FIG. 6 may be implemented by invoking code in the memory 803 by the at least one processor 801. Alternatively, the communication apparatus 800 is an apparatus of a hardware structure, and may be configured to implement function modules in the packet processing apparatus 700 shown in FIG. 7. For example, a person skilled in the art may figure out that the modification unit 702 in the packet processing apparatus 700 shown in FIG. 7 may be implemented by invoking code in the memory 803 by the at least one processor 801.

Optionally, the communication apparatus 800 may be further configured to implement the function of the network device in any one of the foregoing embodiments.

Optionally, the processor 801 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of solutions in this application.

The bus system 802 may include a path to transmit information between the foregoing components.

The communication interface 804 is configured to communicate with another device or communication network.

The memory 803 may be, but is not limited to, a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a blue-ray disc, or the like), a magnetic disk storage medium or another magnetic storage device, or any other medium that can be used to carry or store expected program code in an instruction or data structure form and that can be accessed by a computer. However, this is not limited thereto. The memory may exist independently, and is connected to the processor through a bus. The memory may alternatively be integrated with the processor.

The memory 803 is configured to store application program code for executing solutions of this application, and the processor 801 controls execution. The processor 801 is configured to execute the application program code stored in the memory 803, to implement functions in the method in this application.

During specific implementation, in an embodiment, the processor 801 may include one or more CPUs, for example, a CPU 0 and a CPU 1 shown in FIG. 8.

During specific implementation, in an embodiment, the communication apparatus 800 may include a plurality of processors, for example, the processor 801 and a processor 807 in FIG. 8. Each of the processors may be a single-core (single-CPU) processor, or may be a multi-core (multi-CPU) processor. The processor herein may be one or more devices, circuits, and/or processing cores configured to process data (for example, computer program instructions).

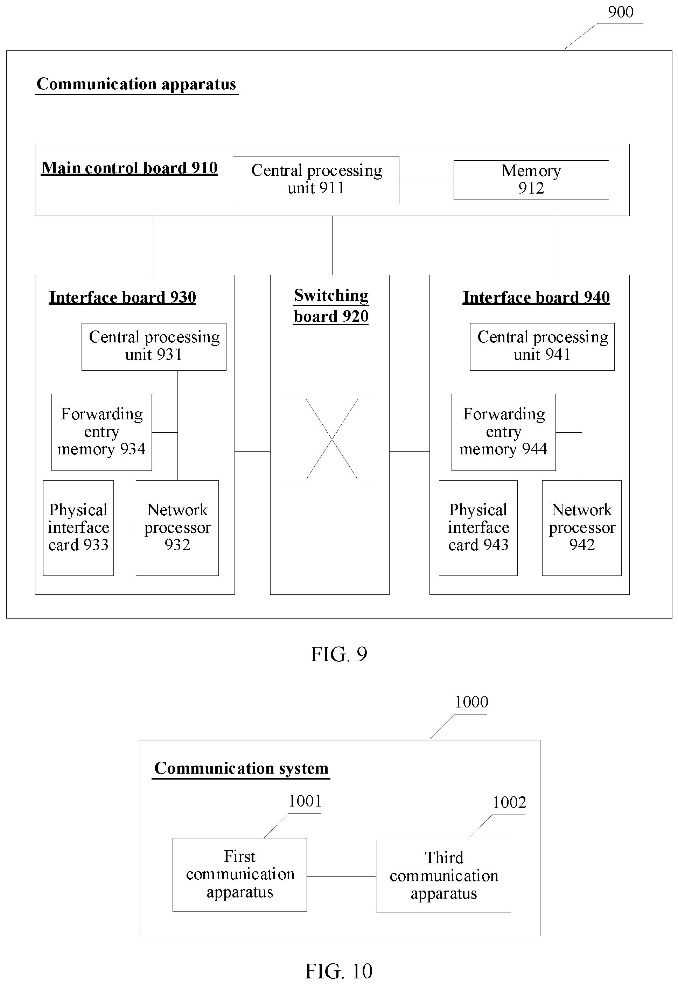

FIG. 9 is a diagram of a structure of another communication apparatus 900 according to an embodiment of this application. The communication apparatus 900 may be the communication apparatus in any one of the foregoing embodiments, for example, may be the communication apparatus 21, the communication apparatus 11, or the notification information 2M in FIG. 1, or may be the first communication apparatus, the second communication apparatus, or the third communication apparatus in FIG. 2. The communication apparatus 900 may implement functions of the communication apparatuses in the foregoing embodiments.

The communication apparatus 900 includes a main control board 910 and an interface board 930.

The main control board 910 is also referred to as a main processing unit (main processing unit, MPU) or a route processor card (route processor card). The main control board 910 controls and manages components in the communication apparatus 900, including functions of route calculation, device management, device maintenance, and protocol processing. The main control board 910 includes a central processing unit 911 and a memory 912.

The interface board 930 is also referred to as a line processing unit (line processing unit, LPU), a line card (line card), or a service board. The interface board 930 is configured to provide various service interfaces and forward a data packet. The service interface includes but is not limited to an Ethernet interface, a POS (Packet over SONET/SDH) interface, and the like. The Ethernet interface is, for example, a flexible Ethernet service interface (Flexible Ethernet Clients, FlexE Clients). The interface board 930 includes a central processing unit 931, a network processor 932, a forwarding entry memory 934, and a physical interface card (physical interface card, PIC) 933.

The central processing unit 931 on the interface board 930 is configured to control and manage the interface board 930, and communicate with the central processing unit 911 on the main control board 910.

The network processor 932 is configured to forward a packet. A form of the network processor 932 may be a forwarding chip. Specifically, processing on an uplink packet includes processing at a packet ingress interface, and forwarding table lookup, and processing on a downlink packet includes forwarding table lookup, and the like.

The physical interface card 933 is configured to implement a physical layer connection function, from which original traffic enters the interface board 930, and a processed packet is sent from the physical interface card 933. The physical interface card 933 includes at least one physical interface. The physical interface is also referred to as a physical port. The physical interface card 933 corresponds to a FlexE physical interface in a system architecture. The physical interface card 933 is also referred to as a subcard, which may be installed on the interface board 930, and is responsible for converting an optical/electrical signal into a packet, performing validity check on the packet, and then forwarding the packet to the network processor 932 for processing. In some embodiments, the central processing unit 931 of the interface board 930 may also perform a function of the network processor 932, for example, implement software forwarding based on a general-purpose CPU. Therefore, the network processor 932 is not required in the physical interface card 933.

Optionally, the communication apparatus 900 includes a plurality of interface boards. For example, the communication apparatus 900 further includes an interface board 940. The interface board 940 includes a central processing unit 941, a network processor 942, a forwarding entry memory 944, and a physical interface card 943.

Optionally, the communication apparatus 900 further includes a switching board 920. The switching board 920 may also be referred to as a switch fabric unit (switch fabric unit, SFU). When the network device has a plurality of interface boards 930, the switching board 920 is configured to complete data exchange between the interface boards. For example, the interface board 930 may communicate with the interface board 940 through the switching board 920.

The main control board 910 is coupled to the interface board 930. For example, the main control board 910, the interface board 930, the interface board 940, and the switching board 920 are connected to a system backboard through a system bus to implement interworking. In a possible implementation, an inter-process communication (inter-process communication, IPC) protocol channel is established between the main control board 910 and the interface board 930, and communication is performed between the main control board 910 and the interface board 930 through the IPC channel.

Logically, the communication apparatus 900 includes a control plane and a forwarding plane. The control plane includes the main control board 910 and the central processing unit 931. The forwarding plane includes components used for forwarding, for example, the forwarding entry memory 934, the physical interface card 933, and the network processor 932. The control plane performs functions of a router, generating a forwarding table, processing signaling and protocol packets, and configuring and maintaining a device status. The control plane delivers the generated forwarding table to the forwarding plane. On the forwarding plane, the network processor 932 performs, based on the forwarding table delivered by the control plane, table lookup and forwarding on a packet received by the physical interface card 933. The forwarding table delivered by the control plane may be stored in the forwarding entry memory 934. In some embodiments, the control plane and the forwarding plane may be completely separated, and are not on a same device.

If the communication apparatus 900 is configured as a first communication apparatus, the network processor 932 may trigger the physical interface card 933 to obtain a first packet. The central processing unit 911 may obtain a hash key value based on the first packet, obtain a first path selecting parameter of a flow corresponding to the first packet, and determine, based on the hash key value and the first path selecting parameter, a first path for sending the first packet. The network processor 932 may trigger the physical interface card 933 to send the first packet through the first path.

It should be understood that the first obtaining unit 601 and the first forwarding unit 605 in the packet processing apparatus 600, and the communication interface 804 in the communication apparatus 800 may be equivalent to the physical interface card 933 or the physical interface card 943 in the communication apparatus 900. The second obtaining unit 602, the third obtaining unit 603, and the first determining unit 604 in the packet processing apparatus 600, and the processor 801 in the communication apparatus 800 may be equivalent to the central processing unit 911 or the central processing unit 931 in the communication apparatus 900.

It should be understood that an operation on the interface board 940 is consistent with an operation on the interface board 930 in this embodiment of this application. For brevity, details are not described. The communication apparatus 900 in this embodiment may correspond to the packet processing apparatus 600 or the communication apparatus 800 in the foregoing embodiments. The main control board 910, the interface board 930, and/or the interface board 940 in the communication apparatus 900 may implement functions and/or various steps implemented in the packet processing apparatus 600 or the communication apparatus 800 in the foregoing embodiments. For brevity, details are not described herein again.

If the communication apparatus 900 is configured as a third communication apparatus, the network processor 932 may trigger the physical interface card 933 to receive a first packet from the first communication apparatus. The central processing unit 911 may modify, based on a path switching identifier, a path selecting parameter in a target flow table in which a hash key value is located, where after the modification, the target flow table includes a first path selecting parameter, and the first path selecting parameter in the target flow table is used by the third communication apparatus to determine a path for sending a packet belonging to a backward flow of the first packet.

It should be understood that the receiving unit 701 in the packet processing apparatus 700 and the communication interface 804 in the communication apparatus 800 may be equivalent to the physical interface card 933 or the physical interface card 943 in the communication apparatus 900. The modification unit 702 in the packet processing apparatus 700 and the processor 801 in the communication apparatus 800 may be equivalent to the central processing unit 911 or the central processing unit 931 in the communication apparatus 900.

It should be understood that an operation on the interface board 940 is consistent with an operation on the interface board 930 in this embodiment of this application. For brevity, details are not described. The communication apparatus 900 in this embodiment may correspond to the packet processing apparatus 700 or the communication apparatus 800 in the foregoing embodiments. The main control board 910, the interface board 930, and/or the interface board 940 in the communication apparatus 900 may implement functions and/or various steps implemented in the packet processing apparatus 700 or the communication apparatus 800 in the foregoing embodiments. For brevity, details are not described herein again.

It should be understood that, there may be one or more main control boards. When there are a plurality of main control boards, the main control boards may include an active main control board and a standby main control board. There may be one or more interface boards. The network device with a stronger data processing capability provides a larger quantity of interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need a switching board, and the interface board provides a function of processing service data of an entire system. In a distributed forwarding architecture, the network device may have at least one switching board, and data exchange between a plurality of interface boards is implemented by using the switching board, to provide a large-capacity data exchange and processing capability. Therefore, a data access and processing capability of the network device in the distributed architecture is greater than that of the device in the centralized architecture. Optionally, the network device may alternatively be in a form in which there is only one card. To be specific, there is no switching board, and functions of the interface board and the main control board are integrated on the card. In this case, a central processing unit on the interface board and a central processing unit on the main control board may be combined to form one central processing unit on the card, to perform functions obtained after the two central processing units are combined. This form of device (for example, a network device like a low-end switch or a router) has a weak data exchange and processing capability. A specific architecture that is to be used depends on a specific networking deployment scenario.

In some possible embodiments, each network device or network device may be implemented as a virtualized device. For example, the virtualized device may be a virtual machine (English: Virtual Machine, VM) on which a program having a packet sending function is run, and the virtual machine is deployed on a hardware device (for example, a physical server). The virtual machine is a complete software-simulated computer system that has complete hardware system functions and that runs in an entirely isolated environment. The virtual machine may be configured as the communication apparatus in embodiments of this application. For example, each network device or network device may be implemented based on a general-purpose physical server with reference to a network functions virtualization (Network Functions Virtualization, NFV) technology. Each network device or network device is a virtual host, a virtual router, or a virtual switch. After reading this application, with reference to the NFV technology, a person skilled in the art may virtualize, on the general-purpose physical server, each network device or network device having the foregoing functions. Details are not described herein again.

It should be understood that the network devices in the foregoing product forms respectively have any function of the network devices or communication devices in the foregoing method embodiments, and details are not described herein again.

An embodiment of this application further provides a chip, including a processor and an interface circuit. The interface circuit is configured to receive instructions and transmit the instructions to the processor. The processor may be, for example, a specific implementation form of the packet processing apparatus in embodiments of this application, and may be configured to perform the foregoing routing method. The processor is coupled to a memory. The memory is configured to store a program or the instructions. When the program or the instructions are executed by the processor, a chip system is enabled to implement the method in any one of the foregoing method embodiments.

Optionally, the chip system may include one or more processors. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, the chip system may also include one or more memories. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a micro controller (micro controller unit, MCU), a programmable controller (programmable logic device, PLD), or another integrated chip.

In addition, an embodiment of this application further provides a communication system 1000. As shown in FIG. 10, the communication system 1000 may include a first communication apparatus 1001 and a third communication apparatus 1002. The first communication apparatus 1001 is configured to perform the method performed by the first communication apparatus in the embodiment shown in FIG. 2. The third communication apparatus 1002 is configured to perform the method performed by the third communication apparatus in the embodiment shown in FIG. 2. The first communication apparatus 1001 may correspond to the packet processing apparatus 600 shown in FIG. 6, and then the third communication apparatus 1002 corresponds to the packet processing apparatus 700 shown in FIG. 7.

In addition, an embodiment of this application further provides a readable storage medium. The readable storage medium stores program code or instructions. When the program code or the instructions are run on a processor, the processor is enabled to perform the method in any one of the implementations in the embodiment shown in FIG. 2.

In addition, an embodiment of this application further provides a program product. When the program product is run on a processor, the processor is enabled to perform the method in any one of the implementations in the method 100.

It should be understood that "determining B based on A" mentioned in embodiments of this application does not mean that B is determined based only on A, and B may alternatively be determined based on A and/or another information.

"First" in names such as "first path selecting parameter" and "first packet" mentioned in this application is merely used as a name identifier, and does not represent "first" in order. Such a rule is also applicable to "second" and the like.

From the foregoing descriptions of the implementations, a person skilled in the art may clearly understand that some or all steps of the methods in embodiments may be implemented by relaying on software and a universal hardware platform. Based on such an understanding, the technical solutions of this application may be implemented in a form of a software product. The computer software product may be stored in a storage medium, for example, a read-only memory (English: read-only memory, ROM)/RAM, a magnetic disk, or a compact disc, and includes several instructions for enabling a computer device (which may be a personal computer, a server, or a network communication device like a router) to perform the methods described in embodiments or some parts of embodiments of this application.

Embodiments in this specification are all described in a progressive manner, for same or similar parts in embodiments, reference may be made to these embodiments, and each embodiment focuses on a difference from other embodiments. Especially, system embodiments and device embodiments are basically similar to method embodiments, and therefore are described briefly. For related parts, refer to partial descriptions in the method embodiments. The described device and system embodiments are merely examples. The modules described as separate parts may or may not be physically separate, and parts displayed as modules may or may not be physical modules, may be located in one position, or may be distributed on a plurality of network units. Some or all the modules may be selected based on actual requirements to achieve the objectives of the solutions of embodiments. A person of ordinary skill in the art may understand and implement embodiments without creative efforts.

The foregoing merely describes exemplary implementations of this application, and is not intended to limit the protection scope of this application. It should be noted that a person of ordinary skill in the art may make improvements and polishing without departing from this application and such improvements and polishing shall fall within the protection scope of this application.

## Claims

1. A packet processing method, applied to a first communication apparatus, and comprising:
obtaining a first packet;
obtaining a hash key value based on the first packet, wherein the hash key value is used by the first communication apparatus to determine a path for sending the first packet;
obtaining a first path selecting parameter of a flow corresponding to the first packet, wherein the first path selecting parameter is used by the first communication apparatus to determine a path for sending the first packet;
determining, based on the hash key value and the first path selecting parameter, a first path for sending the first packet; and sending the first packet through the first path.

2. The method according to claim 1, wherein the method further comprises:
updating the first packet based on the first path selecting parameter, wherein an updated first packet comprises the first path selecting parameter; and
sending the first packet through the first path comprises:
sending the updated first packet through the first path.

3. The method according to claim 2, wherein
the first path comprises a second communication apparatus, and the first path selecting parameter and the hash key value that are in the updated first packet are used by the second communication apparatus to determine a path.

4. The method according to claim 2 or 3, wherein
the updated first packet is a transmission control protocol TCP packet, and the updated first packet carries the first path selecting parameter via a TCP header; or
the updated first packet is a virtual extensible local area network VXLAN packet, and the updated first packet carries the first path selecting parameter via a VXLAN header or a user datagram protocol UDP header; or
the updated first packet is a remote direct memory access RDMA packet, and the updated first packet carries the first path selecting parameter via a base transport header BTH.

5. The method according to any one of claims 1 to 4, wherein the method further comprises:
obtaining first indication information of the flow corresponding to the first packet, wherein the first indication information indicates the first communication apparatus to modify a path selecting parameter; and
updating the first packet based on the first indication information, wherein the updated first packet comprises a path switching identifier corresponding to the first indication information, and the path switching identifier indicates a third communication apparatus to perform path switching.

6. The method according to claim 5, wherein obtaining the first indication information of the flow corresponding to the first packet comprises:
obtaining the first indication information from a target flow table in which the hash key value is located; and
the method further comprises:
updating the first indication information in the target flow table to second indication information, wherein the second indication information indicates that the first communication apparatus does not modify the path selecting parameter.

7. The method according to claim 6, wherein obtaining the first path selecting parameter of the flow corresponding to the first packet comprises:
obtaining the first path selecting parameter from the target flow table.

8. The method according to claim 7, wherein before obtaining the first path selecting parameter of the flow corresponding to the first packet, the method further comprises:
when it is determined that a gray failure that affects the flow corresponding to the first packet exists in a network, modifying a value of a path selecting parameter in the target flow table, wherein after the modification, the target flow table comprises the first path selecting parameter, and before the modification, the target flow table comprises a second path selecting parameter.

9. The method according to claim 8, wherein before modifying the value of the path selecting parameter in the target flow table, the method further comprises:
receiving a second packet, wherein the second packet and the first packet belong to a same flow;
obtaining the hash key value based on the second packet;
obtaining the second path selecting parameter of a flow corresponding to the second packet, wherein the second path selecting parameter is used by the first communication apparatus to determine a path for sending the second packet;
determining, based on the hash key value and the second path selecting parameter, a second path for sending the second packet; and
sending the second packet through the second path.

10. The method according to any one of claims 1 to 5, wherein obtaining the first path selecting parameter of the flow corresponding to the first packet comprises:
obtaining the first path selecting parameter based on the first packet.

11. A packet processing method, applied to a third communication apparatus, wherein the method comprises:
receiving a first packet from a first communication apparatus, wherein the first packet comprises a hash key value, a first path selecting parameter, and a path switching identifier, and the path switching identifier indicates the third communication apparatus to perform path switching; and
modifying, based on the path switching identifier, a path selecting parameter in a target flow table in which the hash key value is located, wherein after the modification, the target flow table comprises the first path selecting parameter, and the first path selecting parameter in the target flow table is used by the third communication apparatus to determine a path for sending a packet belonging to a backward flow of the first packet.

12. The method according to claim 11, wherein the method further comprises:
obtaining a second packet based on the first packet, wherein the second packet does not comprise the path switching identifier, and the first path selecting parameter in the second packet is set to zero; and
forwarding the second packet to a fourth communication apparatus.

13. The method according to claim 11 or 12, wherein modifying, based on the path switching identifier, the path selecting parameter in the target flow table of a flow corresponding to the first packet comprises:
if the path switching identifier is valid, obtaining modification time of the target flow table and a second path selecting parameter in the target flow table; and
if the modification time has exceeded a preset time threshold and the second path selecting parameter is different from the first path selecting parameter, updating the second path selecting parameter in the target flow table to the first path selecting parameter.

14. The method according to any one of claims 11 to 13, wherein
the first packet is a transmission control protocol TCP packet, and the first packet carries the first path selecting parameter via a TCP header; or
the first packet is a virtual extensible local area network VXLAN packet, and the first packet carries the first path selecting parameter via a VXLAN header or a user datagram protocol UDP header; or
the first packet is a remote direct memory access RDMA packet, and the first packet carries the first path selecting parameter via a base transport header BTH.

15. The method according to any one of claims 1 to 14, wherein the first communication apparatus is a switch, a router, a service network interface card, or a virtual switch.

16. A communication apparatus, comprising:
a processing unit, configured to perform operations other than a receiving operation and a sending operation in the method according to any one of claims 1 to 15; and
a transceiver unit, configured to perform the receiving operation and the sending operation in the method according to any one of claims 1 to 15.

17. A communication apparatus, wherein the communication apparatus comprises a memory and a processor;
the memory is configured to store instructions; and
the processor is configured to execute the instructions in the memory, to perform the method according to any one of claims 1 to 15.

18. A communication system, wherein the communication system comprises a first communication apparatus and a second communication apparatus;
the first communication apparatus is configured to perform the method according to any one of claims 1 to 10 or 15; and
the second communication apparatus is configured to perform the method according to any one of claims 11 to 15.

19. A storage medium, wherein the storage medium comprises instructions, and when the instructions are run on a processor, the processor is enabled to perform the method according to any one of claims 1 to 15.

20. A program product, comprising readable instructions, wherein the readable instructions are used to implement the method according to any one of claims 1 to 15.
